# EUROPÄISCHE PATENTSCHRIFT

(11) **EP 1 185 917 B1**
(45) Veröffentlichungstag und Bekanntmachung des Hinweises auf die Patenterteilung: **19.02.2003**
(21) Anmeldenummer: 00945542.9
(22) Anmeldetag: 20.05.2000
(51) Int. Cl.: G06F 1/28, G01R 19/165

(54) **SCHALTUNGSANORDNUNG EINES STEUERGERÄTS ZUR ÜBERWACHUNG EINER SPANNUNG**
CIRCUIT CONFIGURATION OF A CONTROL DEVICE FOR MONITORING AN ELECTRIC POTENTIAL
CIRCUIT D'UN DISPOSITIF DE COMMANDE POUR LA SURVEILLANCE D'UNE TENSION

(30) Priorität: 27.05.1999 DE 19924318
(43) Veröffentlichungstag der Anmeldung: 13.03.2002
(73) Patentinhaber: ROBERT BOSCH GMBH, 70442 Stuttgart (DE)
(72) Erfinder: KROKER, Thomas, D-70567 Stuttgart (DE)
(86) Internationale Anmeldenummer: DE0001624
(87) Internationale Veröffentlichungsnummer: WO00073883

(56) Entgegenhaltungen:
- EP-A- 0 303 289
- DE-B- 2 632 424
- DE-C- 19 814 696
- US-A- 3 789 242
- US-A- 4 951 171

## Beschreibung

Die vorliegende Erfindung betrifft eine Schaltungsanordnung eines Steuergeräts, zur Überwachung einer Spannung auf Spannungsabweichungen über einen bestimmten Spannungswert hinaus und zur Ausgabe eines Resetsignals zum Verriegeln von Endstufen, die von dem Steuergerät gesteuert werden, falls eine Spannungsabweichung über den Spannungswert hinaus auftritt, mit
- Mitteln zur Erzeugung einer Referenzspannung,
- einem ersten Vergleicher zum Vergleichen der Referenzspannung mit einem ersten Vergleichsspannungswert, der sich aus der zu überwachenden Spannung multipliziert mit einem ersten Proportionalitätsfaktor ergibt, und zur Ausgabe des Resetsignals, und
- einem zweiten Vergleicher.

### Stand der Technik

Eine derartige Schaltungsanordnung ist bspw. aus der DE 40 23 700 C2 bekannt. Dort ist eine Schaltungsanordnung zur Überwachung der Frequenz einer Signalfolge einer elektronischen Vorrichtung, insbesondere eines Mikrorechners, offenbart. Der Mikrorechner steuert Endstufen, bspw. die elektrischen Komponenten (Sensoren und Aktoren) einer Verbrennungskraftmaschine. Die Schaltungsanordnung zur Überwachung der Frequenz umfasst auch eine Schaltungsanordnung zur Überwachung einer Spannung, bspw. der Versorgungsspannung des Mikrorechners.

Die bekannte Schaltungsanordnung zur Überwachung einer Spannung weist eine Z-Diode zur Erzeugung einer Referenzspannung auf. Die Z-Diode ist einerseits an einer Bezugsspannung angeschlossen und liegt andererseits über einen Widerstand an Masse. Die Schaltungsanordnung weist außerdem einen ersten und einen zweiten als Operationsverstärker ausgebildeten Vergleicher auf. Der erste Vergleicher dient zur Überwachung der Versorgungsspannung auf das Überschreiten einer Überspannungsschwelle. An dem positiven Eingang des ersten Vergleichers liegt die Referenzspannung. An dem negativen Eingang des ersten Vergleichers liegt eine Überspannungsschwelle an, die an einem Widerstand eines Spannungsteilers abgegriffen wird. Der Spannungsteiler ist einerseits an die Versorgungsspannung angeschlossen und liegt andererseits an Masse. Durch eine geeignete Wahl der Widerstände des Spannungsteilers kann ein Proportionalitätsfaktor festgelegt werden, mit dem die Versorgungsspannung multipliziert wird, um den gewünschten Spannungswert für die Überspannungsschwelle zu erhalten. Der Ausgang des ersten Vergleichers liefert ein erstes Resetsignal zum Verriegeln der Endstufen im Fehlerfall, d. h. wenn die Versorgungsspannung die Überspannungsschwelle überschreitet.

Das Resetsignal wird an den positiven Eingang des zweiten Vergleichers gelegt. An dem negativen Eingang des zweiten Vergleichers liegt die Referenzspannung an. An dem Ausgang des zweiten Vergleichers liegt ein zweites Resetsignal zur Verriegelung von peripheren Bauelementen an. Das zweite Resetsignal liegt nur dann an, wenn die Referenzspannung größer als die Spannung des ersten Resetsignals ist.

Mit der bekannten Schaltungsanordnung Kann eine Spannung demnach lediglich auf das Überschreiten einer Überspannungsschwelle überwacht werden. Eine gleichzeitige Überwachung der Spannung auf das Unterschreiten einer Unterspannungsschwelle ist nicht möglich. Außerdem tritt bei der bekannten Schaltungsanordnung beim Hochfahren der Schaltungsanordnung (Power-On-Fall) das Problem auf, dass die zwei Vergleicher während des Anstiegs der Versorgungsspannung solange in einem nicht definierten Zustand sind, bis die Betriebsspannung der Vergleicher erreicht ist. Dieser nicht definierte Zustand der Vergleicher kann zu einer Fehlfunktion der Schaltungsanordnung zur Überwachung einer Spannung führen.

Der vorliegenden Erfindung liegt die Aufgabe zugrunde, eine Schaltungsanordnung der eingangs genannten Art dahingehend auszugestalten und weiterzubilden, dass die Schaltungsanordnung die zu überwachende Spannung auf das Über- bzw. Unterschreiten zweier unabhängiger und frei bestimmbarer Vergleichsspannungswerte überwachen kann.

Zur Lösung dieser Aufgabe schlägt die Erfindung ausgehend von der Schaltungsanordnung der eingangs genannten Art vor, dass der zweite Vergleicher die Referenzspannung mit einem zweiten Vergleichsspannungswert vergleicht, der sich aus der zu überwachenden Spannung multipliziert mit einem zweiten Proportionalitätsfaktor ergibt, und dass der zweite Vergleicher das Resetsignal ausgibt.

Erfindungsgemäß ist erkannt worden, dass die beiden Vergleicher nicht miteinander verkoppelt sein dürfen, um den zu überwachenden Spannungswert einerseits auf das Überschreiten einer unabhängigen Überspannungsschwelle und andererseits auf das Unterschreiten einer unabhängigen Unterspannungsschwelle überwachen zu können.

Aus diesem Grund liegt an den beiden Verstärkern erfindungsgemäß jeweils ein mittels des Proportionalitätsfaktors frei bestimmbarer Vergleichsspannungswert an. Die erfindungsgemäße Schaltungsanordnung überwacht eine Spannung auf positive und negative Spannungsabweichungen aus einem durch die beiden Vergleichsspannungswerte begrenzten Spannungsfenster hinaus. Die beiden Vergleichsspannungswerte werden an den beiden Vergleichern jeweils mit der Referenzspannung verglichen. Falls die zu überwachende Spannung die Vergleichsspannungswerte über- bzw. unterschreitet, liegt an dem Ausgang zumindest eines der Vergleicher ein Resetsignal zum Verriegeln der Endstufen an. Auf diese Weise kann verhindert werden, dass die Endstufen sowohl bei einer Überspannung als auch bei einer Unterspannung der zu überwachenden Spannung, aufgrund eines undefiniert arbeitenden Rechnerkerns, undefiniert schalten.

Die zu überwachende Spannung ist vorzugsweise die Versorgungsspannung des Rechnerkerns.

Gemäß einer vorteilhaften Weiterbildung der vorliegenden Erfindung wird vorgeschlagen, dass die Schaltungsanordnung zwei Spannungsteiler aufweist, die einerseits an die zu überwachende Spannung angeschlossen sind und andererseits an Masse anliegen, wobei die Vergleichsspannungswerte an einem Abgriff der Spannungsteiler abgreifbar sind. Durch eine geeignete Wahl der Widerstände eines Spannungsteilers kann der Proportionalitätsfaktor frei bestimmt werden. Durch die Multiplikation der zu überwachenden Spannung mit dem Proportionalitätsfaktor kann der an dem Vergleicher anliegende Vergleichsspannungswert eingestellt werden.

Dadurch dass bei der erfindungsgemäßen Schaltungsanordnung jedem Vergleicher ein eigener Spannungsteiler zugeordnet ist, können die an den beiden Vergleichern anliegenden Vergleichsspannungswerte unabhängig voneinander frei gewählt werden. Auf diese Weise kann ein beliebiges Spannungsfenster mit einer oberen Überspannungsschwelle und einer unteren Unterspannungsschwelle festgelegt werden, in dem die zu überwachende Spannung im Normalfall liegen sollte. Sobald die Spannung dieses Spannungsfenster verlässt wird das Resetsignal aktiviert und die Endstufen werden verriegelt.

Demgemäß wird bei einer bevorzugten Ausführungsform der Erfindung vorgeschlagen, dass die Widerstände der Spannungsteiler derart gewählt sind, dass der erste Vergleichsspannungswert an dem Abgriff des ersten Spannungsteilers eine Überspannungsschwelle und der zweite Vergleichsspannungswert an dem Abgriff des zweiten Spannungsteilers eine Unterspannungsschwelle darstellt.

Gemäß einer besonders bevorzugten Ausführungsform der Erfindung sind die Vergleicher als Komparatoren ausgebildet. Ein Komparator ist bspw. als ein nichtgegengekoppelter Differenzverstärker großer Empfindlichkeit ausgebildet. Der Ausgang eines im Tristate-Modus beschalteten Komparators (open collector) liegt im Ruhezustand auf einem hohen Potential (HI). Je nach dem, wie die Eingänge des Komparators beschaltet sind, schaltet der Komparator beim Überschreiten einer Vergleichsspannungsschwelle oder beim unterschreiten einer Vergleichsspannungsschwelle auf ein niedriges Potential (LO).

Vorteilhafterweise liegt bei dem ersten Komparator die Referenzspannung an dem positiven Eingang und der erste Vergleichsspannungswert an dem negativen Eingang an und bei dem zweiten Komparator die Referenzspannung an dem negativen Eingang und der zweite Vergleichsspannungswert an dem positiven Eingang an. Der erste Komparator überwacht somit, ob die zu überwachende Spannung eine Überspannungsschwelle überschreitet. Falls das der Fall ist, schaltet der Ausgang des ersten Komparators auf LO. Der zweite Komparator überwacht, ob die zu überwachende Spannung eine Unterspannungsschwelle unterschreitet und schaltet seinen Ausgang gegebenenfalls auf LO.

Die Mittel zur Erzeugung einer Referenzspannung sind vorzugsweise als eine Referenzspannungsdiode ausgebildet.

An dem Abgriff des ersten Spannungsteilers ist gemäß einer vorteilhaften Weiterbildung der Erfindung der Kollektor eines Transistors angeschlossen, dessen Emitter an der zu überwachenden Spannung angeschlossen ist und dessen Basis an einen ersten Anschluss eines Rechners des Steuergeräts angeschlossen ist und über einen Pull-Down-Widerstand an Masse liegt.

Ebenso wird vorgeschlagen, dass an dem Abgriff des zweiten Spannungsteilers der Kollektor eines Transistors angeschlossen ist, dessen Emitter an Masse liegt und dessen Basis an einen zweiten Anschluss eines Rechners des Steuergeräts angeschlossen ist und über einen Pull-Down-Widerstand an der zu überwachenden Spannung angeschlossen ist.

Durch die den Spannungsteilern vorgeschalteten Transistoren wird sichergestellt, dass sich die Komparatoren beim Hochfahren der Versorgungsspannung des Steuergerätes in einem definierten Zustand befinden. Während des Hochfahrens des Steuergeräts steigt die Versorgungsspannung des Steuergeräts nicht abrupt von einem Augenblick zum nächsten, sondern über einen längeren Zeitraum hinweg kontinuierlich an. Da die Komparatoren erst ab einer bestimmten Betriebsspannung zuverlässig arbeiten, besteht die Gefahr, dass die Komparatoren während des Hochfahrens des Steuergeräts vor Erreichen der Betriebspannung in einem nicht definierten Zustand geraten. Die Transistoren arbeiten dagegen bereits ab einer Betriebsspannung, die wesentlich unter der Betriebsspannung der Komparatoren liegt. Beim Hochfahren des Steuergeräts arbeiten also zunächst die Transistoren mit ihrer Betriebsspannung und versetzen die Komparatoren in einen definierten Zustand. Die Transistoren sind zudem derart verschaltet, dass sie auch dann in einem definierten Zustand sind, wenn sie ihre Betriebsspannung noch nicht erreicht haben.
Gemäß einer anderen vorteilhaften Ausführungsform der vorliegenden Erfindung wird vorgeschlagen, dass der Rechner des Steuergeräts an die Anschlüsse zu der Schaltungsanordnung ein Initialisierungssignal zum Freischalten der Endstufen anlegt, solange er in einem zuverlässig arbeitenden Zustand ist. Da die Komparatoren erst ab einer bestimmten Betriebsspannung zuverlässig arbeiten, besteht die Gefahr, dass die Komparatoren während des Hochfahrens des Steuergeräts vor Erreichen der Betriebspannung in einem nicht definierten Zustand geraten. Um dies zu verhindern, arbeiten bei der erfindungsgemäßen Schaltungsanordnung die Komparatoren erst auf Initialisierungssignale des Rechners an den Anschlüssen zu der Schaltungsanordnung hin.

Ein bevorzugtes Ausführungsbeispiel der vorliegenden Erfindung wird nachfolgend anhand der Zeichnungen näher erläutert. Es zeigen:
- Figur 1: ein Blockschaltbild eines Reset-Pfades für ein Steuergerät mit einer symbolisch dargestellten erfindungsgemäßen Schaltungsanordnung;
- Figur 2: eine erfindungsgemäße Schaltungsanordnung gemäß einer ersten Ausführungsform; und
- Figur 3: den Verlauf ausgewählter Signale bei der Schaltungsanordnung gemäß Figur 2.

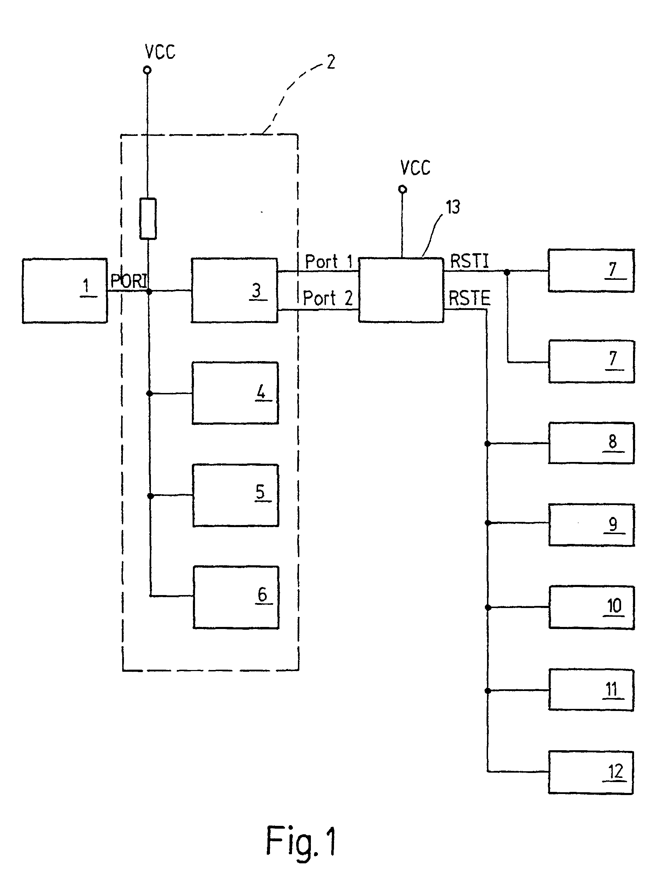

In Figur 1 ist ein Blockschaltbild eines Reset-Pfades für ein Steuergerät dargestellt, das eine Verbrennungskraftmaschine eines Kraftfahrzeugs über mehrere Endstufen (7 bis 12) steuert. Das Steuergerät steuert insbesondere Injektoren der Verbrennungskraftmaschine, Abgasrückführsteller, Druckregler für den Common-Rail-Druck, elektrische Kraftstoffpumpen, variable Turbogeometrien und Klimakompressoren.

Das Steuergerät weist einen Stabilisator 1 auf, der eine an sich konstante Versorgungsspannung VCC = 5V an einen Rechner 2 liefert. Der Rechner 2 umfasst einen Rechnerkern 3, programmierbare logische Bauelemente (PLDs) 4, die bspw. als ein Gate-Array ausgebildet sind, elektrisch löschbare Festwertspeicher (EEPROMs) 5 und Flash-Speicher (Flash-EPROMs) 6. Der Rechner 2 ist für einen Versorgungsspannungsbereich von 4,5V bis 5,5V spezifiziert. Mit einer Versorgungsspannung VCC, die außerhalb dieses Bereichs liegt, funktioniert der Rechner 2 nicht zuverlässig. Deshalb müssen die von dem Steuergerät angesteuerten Endstufen aus Sicherheitsgründen sofort abgeschaltet werden, sobald die Versorgungsspannung VCC den Bereich von 4,5V bis 5,5V verlässt.

Die Versorgungsspannung VCC kann bspw. beim Hochfahren des Steuergeräts oder bei einem Defekt des Stabilisators 1 von ihrem Nennwert VCC = 5V so weit abweichen, dass sie den Versorgungsspannungsbereich von 4,5V bis 5,5V verlässt. Ein Defekt des Spannungsreglers in dem Stabilisator 1 kann zu einer Überspannung, ein Kurzschluss in dem Stabilisator 1 unter bestimmten Umständen zu einer Unterspannung führen.

Der Stabilisator 1 verfügt über einen Unterspannungsreset, der bei einer Versorgungsspannung VCC von weniger als 4,6V (VCC < 4,6V) über den Anschluss PORI ein Reset bei dem Rechnerkern 3, den PLDs 4, den EEPROMs 5 und den Flash-EPROMs 6 durchführt. An den Anschlüssen Port1 und Port2 des Rechners 2 liegen in einem solchen Fall keine Initialisierungssignale an (Tri-State).

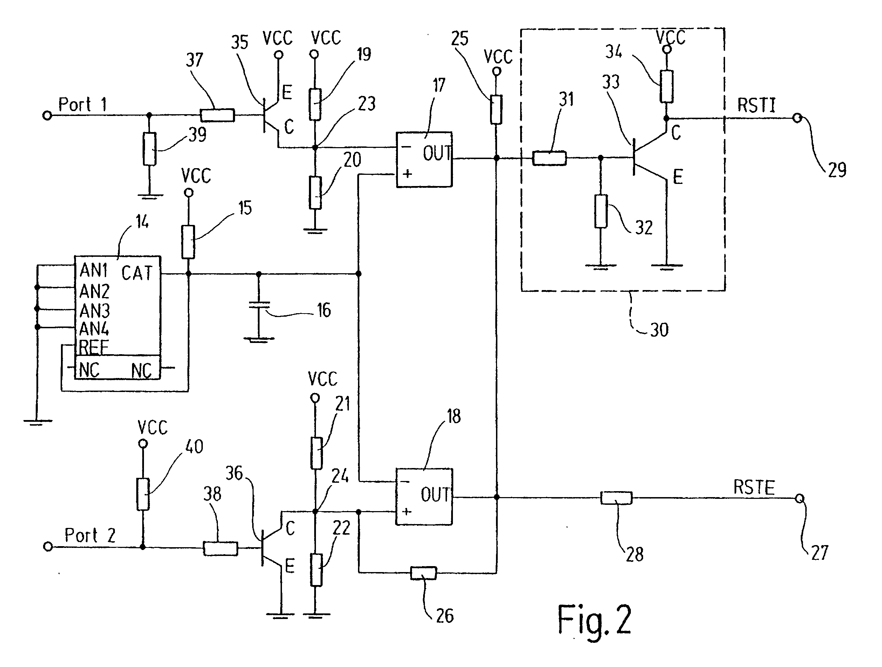

Das Steuergerät weist außerdem eine erfindungsgemäße Schaltungsanordnung 13 auf, die in Figur 1 nur symbolisch und in Figur 2 im Detail dargestellt ist. Die Schaltungsanordnung 13 hat die Aufgabe, die von dem Steuergerät gesteuerten Endstufen 7 bis 12 sicher zu verriegeln, wenn sich der Rechner 2 des Steuergeräts in einem nicht definierten Zustand befindet, d. h. wenn die Versorgungsspannung VCC außerhalb des Bereichs von 4,5V bis 5,5V liegt. Dazu überwacht die Schaltungsanordnung 13 die Versorgungsspannung VCC und gibt ein Resetsignal RSTE an die Endstufen 8 bis 12 bzw. ein invertiertes Resetsignal RSTI an die Injektoren 7 ab, wenn die Versorgungsspannung VCC unterhalb einer Unterspannungsschwelle oder oberhalb einer Überspannungsschwelle liegt. Die Resetsignale RSTE und RSTI der Schaltungsanordnung 13 werden aber erst auf Initialisierungssignale des Rechners 2 an den Anschlüssen Port1 und Port2 freigegeben.

Die Schaltungsanordnung 13 (vgl. Figur 2) weist eine Referenzspannungsdiode 14 auf, die eine konstante Referenzspannung VREF von nominal 2,5V erzeugt. Die Referenzspannung VREF bleibt so lange konstant, wie die Versorgungsspannung VCC mindestens 2,5V beträgt. Sinkt die Versorgungsspannung VCC unterhalb von 2,5V, dann sinkt die Referenzspannung VREF mit der Versorgungsspannung VCC bis auf 0V ab. Die Referenzspannung VREF liegt an dem Anschluss REF der Referenzspannungsdiode 14 an. Die Anschlüsse AN1 bis AN 4 der Referenzspannungsdiode 14 sind an Masse gelegt. Die Anschlüsse NC der Referenzspannungsdiode 14 sind nicht verbunden (not connected, NC). Der an Masse liegenden Referenzspannungsdiode 14 ist ein Kondensator 16 parallel geschaltet. Der Anschluss REF der Referenzspannungsdiode 14 liegt über einen Widerstand 15 an der Versorgungsspannung VCC. Der Widerstand 15 dient zur Begrenzung des durch die Referenzspannungsdiode 14 fließenden Stroms. Der Kondensator dient zur Beseitigung der Schwingneigung der Referenzspannungsdiode 14.

Die Referenzspannung liegt an dem positiven (+)-Eingang eines ersten Komparators 17, der die Versorgungsspannung VCC auf Überschreiten einer Überspannungsschwelle überwacht, und an dem negativen (-)-Eingang eines zweiten Komparators 18, der die Versorgungsspannung VCC auf Unterschreiten einer Unterspannungsschwelle überwacht. Die beiden Komparatoren 17, 18 sind als ein Zweifachkomparator mit Open-Collector-Ausgang OUT ausgebildet.

An dem (-)-Eingang des ersten Komparators 17 liegt eine Spannung an, die sich an einem Abgriff 23 zwischen zwei Widerständen 19, 20 einstellt. Die beiden Widerstände 19, 20 sind zwischen der Versorgungsspannung VCC und Masse geschaltet und bilden einen Spannungsteiler. Die sich an dem Abgriff 23 einstellende Spannung ist somit abhängig von der Versorgungsspannung VCC und den Widerstandswerten der beiden Widerstände 19, 20. Durch eine geeignete Wahl der beiden Widerstände 19, 20 kann eine Überspannungsschwelle der Versorgungsspannung VCC eingestellt werden. Die Widerstände 19, 20 werden in dem vorliegenden Ausführungsbeispiel derart gewählt, dass sich eine Überspannungsschwelle von 5,5V einstellt. Genauer gesagt, werden die Widerstände 19, 20 derart gewählt, dass sich an dem Abgriff 23 eine Spannung einstellt, die so lange kleiner ist als die Referenzspannung VREF, wie die Versorgungsspannung VCC unter 5,5V bleibt.

Ebenso liegt an dem (+)-Eingang des zweiten Komparators 18 eine Spannung an, die sich an einem Abgriff 24 zwischen zwei Widerständen 21, 22 eines Spannungsteilers einstellt. Die beiden Widerstände 21, 22 sind ebenfalls zwischen der Versorgungsspannung VCC und Masse geschaltet. Die sich an dem Abgriff 24 einstellende Spannung ist abhängig von der Versorgungsspannung VCC und von den Widerstandswerten der beiden Widerstände 21, 22. Durch eine geeignete Wahl der beiden Widerstände 21, 22 kann eine Unterspannungsschwelle der Versorgungsspannung VCC eingestellt werden. Die Widerstände 21, 22 werden in dem vorliegenden Ausführungsbeispiel derart gewählt, dass sich eine Unterspannungsschwelle von 4,5 V einstellt. Genauer gesagt, werden die Widerstände 21, 22 derart gewählt, dass sich an dem Abgriff 24 eine Spannung einstellt, die so lange größer ist als die Referenzspannung VREF, wie die Versorgungsspannung VCC über 4,5V bleibt.

Mit der erfindungsgemäßen Schaltungsanordnung 13 kann die Versorgungsspannung VCC also sowohl auf das Überschreiten einer Überspannungsschwelle als auch auf das Unterschreiten einer Unterspannungsschwelle hin überwacht werden. Sowohl die Überspannungsschwelle als auch die Unterspannungsschwelle können unabhängig voneinander eingestellt werden.

Da die Komparatoren 17, 18 im sog. Tristate-Modus geschaltet sind ist der Ausgang CUT eines Komparators 17; 18 im Ruhezustand des Komparators 17; 18 durch den Widerstand 25 auf HI (ein hohes Potential) geschaltet. Der Ausgang OUT des ersten Komparators 17 schaltet dann auf LO (ein niedriges Potential), wenn die an dem (-)-Eingang anliegende Spannung von dem Abgriff 23 über der an dem (+)-Eingang anliegenden Referenzspannung VREF liegt, d. h. wenn die Versorgungsspannung VCC die Überspannungsschwelle überschritten hat. Ebenso schaltet der Ausgang OUT des zweiten Komparators 18 auf LO, wenn die an dem (+)-Eingang anliegende Spannung von dem Abgriff 24 unter der an dem (-)-Eingang anliegenden Referenzspannung VREF liegt, d. h. wenn die Versorgungsspannung VCC die Unterspannungsschwelle unterschritten hat. Die Ausgänge OUT der Komparatoren 17, 18 liegen über einen Pull-Up-Widerstand 25 an der Versorgungsspannung VCC. Der Pull-Up-Widerstand 25 wird zum Herbeiführen des HI-Zustands an den Ausgängen OUT der Komparatoren 17, 18 benötigt.

Zwischen dem (+)-Eingang und dem Ausgang OUT des zweiten Komparators 18 ist ein Hysterese-Widerstand 26 geschaltet. Der Hysterese-Widerstand 26 ist nur im Unterspannungspfad vorgesehen, da die Unterspannungsschwelle sowohl von oben. (beim Abfallen der Versorgungsspannung VCC von einem Wert oberhalb der Unterspannungsschwelle (z. B. 5V) auf einen Wert unterhalb der Unterspannungsschwelle (z. B. 4V)) als auch von unten (beim Hochfahren des Steuergeräts (Power-On), bzw. der Versorgungsspannung VCC) durchlaufen werden kann. Im Power-On-Fall wird aufgrund der Hysterese auch jenseits einer Versorgungsspannung VCC < 4,5V bis zu einer Versorgungsspannung VCC < 4,7V eine Unterspannung detektiert.

Der LO-Zustand am Ausgang OUT der Komparatoren 17, 18 entspricht dem Resetsignal RSTE. Zwischen dem Anschluss 27 der Schaltungsanordnung 13, an dem das Resetsignal RSTE anliegt, und den Komparatoren 17, 18 ist ein Begrenzungswiderstand 28 längs geschaltet. Der Begrenzungs-Widerstand 28 dient im Fehlerfall einer der Endstufen 7 bis 12 dazu, den unter Umständen aus der fehlerhaften Endstufe 7 bis 12 in die Schaltungsanordnung 13 zurückfließenden Strom auf den maximalen Sinkstrom des Komparators 17; 18 zu begrenzen. Im vorliegenden Ausführungsbeispiel ist der Begrenzungs-Widerstand 28 derart gewählt, dass der zurückfließende Strom auf 16mA begrenzt wird.

An einem Anschluss 29 der Schaltungsanordnung 13 liegt das invertierte Resetsignal RSTI an. Um aus dem Resetsignal RSTE das invertierte Resetsignal RSTI zu erhalten, ist zwischen dem Anschluss 29 und den Komparatoren 17, 18 ein Inverter 30 angeordnet. Der Inverter 30 weist einen ersten längs geschalteten Widerstand 31, einen zweiten auf Masse geschalteten Widerstand 32 und einen Transistor 33 auf, dessen Emitter auf Masse geschaltet und dessen Kollektor über einen dritten Widerstand 34 an die Versorgungsspannung VCC angeschlossen ist. Der Anschluss 29 wird an dem Kollektor des Inverters 30 abgegriffen.

Wenn am Eingang des Inverters 30 ein Resetsignal RSTE im LO-Zustand anliegt, sperrt der Transistor 33 und an dem Anschluss 29 liegt die Versorgungsspannung VCC über den Widerstand 34 an, was dem HI-Zustand entspricht. Wenn dagegen am Eingang des Inverters 30 ein Resetsignal RSTE im HI-Zustand anliegt, schaltet der Transistor 33 in seine Durchlassstellung und der Anschluss 29 liegt an Masse, was dem LO-Zustand entspricht.

Während des Hochfahrens der Spannungsversorgung des Steuergeräts steigt die Versorgungsspannung VCC nicht abrupt von einem Augenblick zum nächsten, sondern über einen längeren Zeitraum hinweg kontinuierlich, im vorliegenden Ausführungsbeispiel von 0V auf 5V, an. Da die Komparatoren 17, 18 erst ab einer bestimmten Versorgungsspannung VCC (Betriebsspannung) zuverlässig arbeiten, besteht die Gefahr, dass die Komparatoren 17, 18 während des Hochfahrens des Steuergeräts vor Erreichen der Betriebspannung in einem nicht definierten Zustand geraten. Um dies zu verhindern, arbeiten bei der erfindungsgemäßen Schaltungsanordnung 13 die Komparatoren 17, 18 erst auf Initialisierungssignale des Rechners 2 an den Anschlüssen Port1 und Port2 hin. Die Initialisierungssignale bestehen aus Port1 auf HI und Port2 auf LO geschaltet. Durch diese Initialisierungssignale soll verhindert werden, dass die Endstufen 7 bis 12 beim Hochfahren der Spannungsversorgung des Steuergeräts freigegeben werden, bevor der Rechner 2 zuverlässig arbeitet.

Zum Verarbeiten der Initialisierungssignale ist an den Abgriffen 23, 24 jeweils der Kollektor eines Transistors 35, 36 angeschlossen. Der Emitter des Transistors 35 ist an die Versorgungsspannung VCC angeschlossen, der Emitter des Transistors 26 liegt an Masse. Zwischen den Transistoren 35, 36 und Port1 und Port2 ist jeweils ein Vorwiderstand 37, 38 längs geschaltet. Port1 liegt über einen Pull-Down-Widerstand 39 an Masse. Port 2 ist über einen Pull-Down-Widerstand 40 an die Versorgungsspannung VCC angeschlossen. Zur Freigabe der Endstufen 7 bis 12 werden vier Bedingungen benötigt:
- Versorgungsspannung VCC > Unterspannungsschwelle,
- Versorgungsspannung VCC < Überspannungsschwelle,
- Port1 ist HI geschaltet,
- Port2 ist LO geschaltet.

Ein Transistor arbeitet bereits ab einer Betriebsspannung von etwa 1V, in der Regel sogar ab einer Betriebsspannung von 0,7V, zuverlässig. Die Betriebsspannung eines Transistors liegt unterhalb der Betriebsspannung eines Komparators oder Operationsverstärkers. Während des Hochfahrens des Steuergeräts erreichen also zunächst die Transistoren 35, 36 ihre Betriebsspannung. Dadurch können die Komparatoren 17, 18 durch die Transistoren 35, 36 in einen definierten Zustand gebracht werden. Die Transistoren 35, 36 sind ihrerseits derart verschaltet, dass sie auch dann in einem definierten Zustand sind, wenn sie ihre Betriebsspannung noch nicht erreicht haben. Mit der erfindungsgemäßen Schaltungsanordnung 13 wird also erreicht, dass die Komparatoren 17, 18 auch beim Hochfahren des Steuergeräts noch vor dem Einschalten des Steuergeräts in einem definierten Zustand sind.

Ein Fachmann kann die vorliegende Schaltungsanordnung 13 auf viele unterschiedliche Arten realisieren. Alle diese unterschiedlichen Realisierungsarten sind von dem Gegenstand der vorliegenden Erfindung mit umfasst. Insbesondere ist es denkbar, statt der Komparatoren 17, 18 Operationsverstärker einzusetzen. Des Weiteren kann das Resetsignal RSTE statt durch den Inverter 30 durch eine retriggerbare monostabile Kippstufe (RS-Flip-Flop) invertiert werden. Es ist schließlich auch denkbar, statt der Referenzspannungsdiode 14 eine Z-Diode zu verwenden.

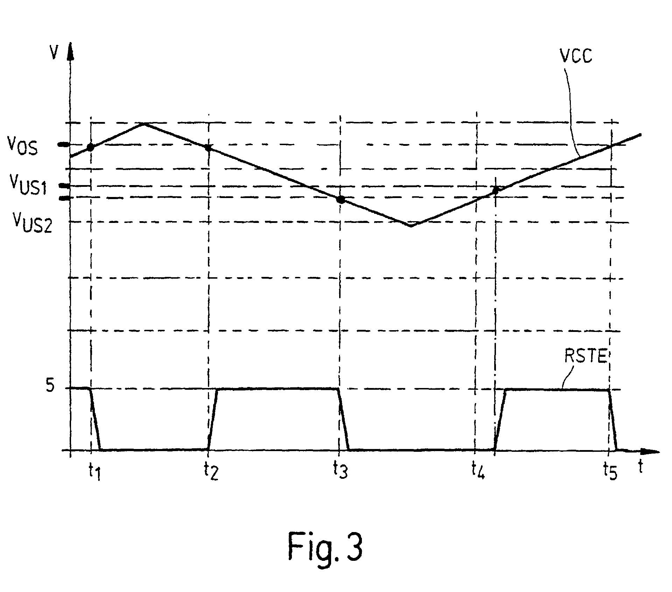

In Figur 3 ist ein beispielhafter Verlauf der Versorgungsspannung VCC und das sich daraus bei der erfindungsgemäßen Schaicungsanordnung 13 ergebende Resetsignal RSTE dargestellt. Für die Versorgungsspannung VCC wurde ein Dreiecksignal mit einem Offset von 5V und einer Amplitude von VPP=2V gewählt. Die Versorgungsspannung VCC schwankt also zwischen 4V und 6V. Die Überspannungsschwelle VOS wurde auf 5,5V und die Unterspannungsschwelle VUS auf 4,5V gesetzt. Da die Komparatoren 17, 18 im sog, Tristate-Modus geschaltet sind ist der Ausgang OUT eines Komparators 17; 18 im Ruhezustand des Komparators 17; 18 und damit auch das Resetsignal RSTE auf HI geschaltet. Der Ruhezustand liegt dann vor, wenn die Versorgungsspannung VCC innerhalb des von der Überspannungsschwelle VOS und der Unterspannungsschwelle VUS begrenzten Spannungsfensters liegt. Im Ruhezustand der Komparatoren 17, 18 sind die Endstufen 7 bis 12 freigegeben, wenn zusätzlich der Port1 auf HI und der Port2 auf LO geschaltet ist.

Zu Beginn (t < t1) des in Figur 3 dargestellten Signalverlaufs befindet sich die Versorgungsspannung VCC innerhalb des Spannungsfensters und das Resecsignal liegt auf HI. Zum Zeitpunkt t1 überschreitet die Versorgungsspannung VCC die Übetspannungsschwelle VOS. Infolgedessen wechselt das Resetsignal RSTE von HI auf LO und die Endstufen 7 bis 12 werden verriegelt. Die Versorgungsspannung VCC steigt weiter an, erreicht ihr Maximum von 6V und fällt dann wieder ab, bis sie zum Zeitpunkt t2 die Überspannungsschwelle VOS unterschreitet und wieder in das Spannungsfenster eintritt. Dadurch wechselt das Resetsignal RSTE wieder auf HI und die Endstufen 7 bis 12 werden wieder freigegeben, sofern die Initialisierungssignale an Port1 und Port2 anliegen, d. h. Port1 auf HI und Port2 auf LO geschaltet ist.

Die Versorgungsspannung VCC fällt weiter ab, bis sie zum Zeitpunkt t3 die Unterspannungsschwelle VUS2 unterschreitet und das Resetsignal RSTE infolgedessen von HI auf LO wechselt und die Endstufen 7 bis 12 wieder verriegelt. Zum Zeitpunkt t4 überschreitet die Versorgungsspannung VCC die Unterspannungsschwelle VUS1 und das Resetsignal RSTE wechselt wieder auf HI. Die Endstufen 7 bis 12 werden wieder freigegeben, sofern die Initialisierungssignale an Port1 und Port2 anliegen. Die Differenz zwischen VUS1 und VUS2 ist die Hysterese, die durch den Hysteresewiderstand 26 eingestellt wird. Schließlich überschreitet die Versorgungsspannung VCC die Überspannungsschwelle VOS zum Zeitpunkt t5 noch einmal, das Resetsignal wechselt von HI auf LO und die Endstufen 7 bis 12 werden verriegelt.

## Patentansprüche

1. Schaltungsanordnung (13) eines Steuergeräts, zur Überwachung einer Spannung auf Spannungsabweichungen über einen bestimmten Spannungswert hinaus und zur Ausgabe eines Resetsignals (RSTE) zum Verriegeln von Endstufen (7 bis 12), die von dem Steuergerät gesteuert werden, falls eine Spannungsabweichung über den Spannungswert hinaus auftritt, mit
- Mitteln zur Erzeugung einer Referenzspannung (REF),
- einem ersten Vergleicher zum Vergleichen der Referenzspannung (REF) mit einem ersten Vergleichsspannungswert, der sich aus der zu überwachenden Spannung multipliziert mit einem ersten Proportionalitätsfaktor ergibt, und zur Ausgabe des Resetsignals (RSTE), und
- einem zweiten Vergleicher,
**dadurch gekennzeichnet, dass** der zweite Vergleicher die Referenzspannung (REF) mit einem zweiten Vergleichsspannungswert vergleicht, der sich aus der zu überwachenden Spannung multipliziert mit einem zweiten Proportionalitätsfaktor ergibt, und dass der zweite Vergleicher das Resetsignal (RSTE) ausgibt.

2. Schaltungsanordnung (13) nach Anspruch 1, **dadurch gekennzeichnet, dass** die Schaltungsanordnung (13) zwei Spannungsteiler aufweist, die einerseits an die zu überwachende Spannung angeschlossen sind und andererseits an Masse anliegen, wobei die Vergleichsspannungswerte an einem Abgriff (23; 24) der Spannungsteiler abgreifbar sind.

3. Schaltungsanordnung nach Anspruch 2, **dadurch gekennzeichnet, dass** die Widerstände (19, 20; 21, 22) der Spannungsteiler derart gewählt sind, dass der erste Vergleichsspannungswert an dem Abgriff (23) des ersten Spannungsteilers eine Überspannungsschwelle und der zweite Vergleichsspannungswert an dem Abgriff (24) des zweiten Spannungsteilers eine Unterspannungsschwelle darstellt.

4. Schaltungsanordnung 13 nach einem der Ansprüche 1 bis 3, **dadurch gekennzeichnet, dass** die Vergleicher als Komparatoren (17, 18) ausgebildet sind.

5. Schaltungsanordnung 13 nach Anspruch 4, **dadurch gekennzeichnet, dass** bei dem ersten Komparator (17) die Referenzspannung (REF) an der positiven (+)-Eingang und der erste Vergleichsspannungswert an dem negativen (-)-Eingang anliegt und bei dem zweiten Komparator (18) die Referenzspannung (REF) an dem negativen (-)-Eingang und der zweite Vergleichsspannungswert an dem positiven (+) -Eingang anliegt.

6. Schaltungsanordnung (13) nach einem der Ansprüche 1 bis 5, **dadurch gekennzeichnet, dass** die Mittel zur Erzeugung einer Referenzspannung als eine Referenzspannungsdiode (14) ausgebildet sind.

7. Schaltungsanordnung (13) nach einem der Ansprüche 2 bis 6, **dadurch gekennzeichnet, dass** an dem Abgriff (23) des ersten Spannungsteilers der Kollektor eines Transistors (35) angeschlossen ist, dessen Emitter an der zu überwachenden Spannung angeschlossen ist und dessen Basis an einen ersten Anschluss (Port1) eines Rechners (2) des Steuergeräts angeschlossen ist und über einen Pull-Down-Widerstand (39) an Masse liegt.

8. Schaltungsanordnung (13) nach einem der Ansprüche 2 bis 7, **dadurch gekennzeichnet, dass** an dem Abgriff (24) des zweiten Spannungsteilers der Kollektor eines Transistors (36) angeschlossen ist, dessen Emitter an Masse liegt und dessen Basis an einen zweiten Anschluss (Port2) eines Rechners (2) des Steuergeräts angeschlossen ist und über einen Pull-Down-Widerstand (40) an der zu überwachenden Spannung angeschlossen ist.

9. Schaltungsanordnung (13) nach Anspruch 7 oder 8, **dadurch gekennzeichnet, dass** der Rechner (2) des Steuergeräts an die Anschlüsse (Port1, Port2) ein Initialisierungssignal zum Freischalten der Endstufen (7 bis 12) anlegt, solange er in einem zuverlässig arbeitenden Zustand ist.

10. Schaltungsanordnung (13) nach einem der Ansprüche 1 bis 9, **dadurch gekennzeichnet, dass** die zu überwachende Spannung die Versorgungsspannung (VCC) des Steuergeräts ist.

## Claims

1. Circuit arrangement (13) of a control unit, for monitoring a voltage for voltage deviations beyond a specific voltage value and for outputting a reset signal (RSTE) for latching output stages (7 to 12) which are controlled by the control unit, if a voltage deviation beyond the voltage value occurs, having
- means for generating a reference voltage (REF),
- a first comparison device for comparing the reference voltage (REF) with a first comparison voltage value, which results from the voltage to be monitored multiplied by a first proportionality factor, and for outputting the reset signal (RSTE), and
- a second comparison device,
**characterized in that** the second comparison device compares the reference voltage (REF) with a second comparison voltage value, which results from the voltage to be monitored multiplied by a second proportionality factor, and **in that** the second comparison device outputs the reset signal (RSTE).

2. Circuit arrangement (13) according to Claim 1, **characterized in that** the circuit arrangement (13) has two voltage dividers which, on the one hand, are connected to the voltage to be monitored and, on the other hand, are earthed, the comparison voltage values being able to be tapped off at a tap (23; 24) of the voltage dividers.

3. Circuit arrangement according to Claim 2, **characterized in that** the resistors (19, 20; 21, 22) of the voltage dividers are chosen in such a way that the first comparison voltage value at the tap (23) of the first voltage divider represents an overvoltage threshold and the second comparison voltage value at the tap (24) of the second voltage divider represents an undervoltage threshold.

4. Circuit arrangement (13) according to one of Claims 1 to 3, **characterized in that** the comparison devices are designed as comparators (17, 18).

5. Circuit arrangement (13) according to Claim 4, **characterized in that**, in the case of the first comparator (17) the reference voltage (REF) is present at the positive (+) input and the first comparison voltage value is present at the negative (-) input and, in the case of the second comparator (18) the reference voltage (REF) is present at the negative (-) input and the second comparison voltage value is present at the positive (+) input.

6. Circuit arrangement (13) according to one of Claims 1 to 5, **characterized in that** the means for generating a reference voltage are designed as a reference voltage diode (14).

7. Circuit arrangement (13) according to one of Claims 2 to 6, **characterized in that** the collector of a transistor (35) is connected to the tap (23) of the first voltage divider, the emitter of which transistor is connected to the voltage to be monitored and the base of which transistor is connected to a first port (Port1) of a computer (2) of the control unit and is earthed via a pull-down resistor (39).

8. Circuit arrangement (13) according to one of Claims 2 to 7, **characterized in that** the collector of a transistor (36) is connected to the tap (24) of the second voltage divider, the emitter of which transistor is earthed and the base of which transistor is connected to a second port (Port2) of a computer (2) of the control unit and is connected to the voltage to be monitored via a pull-down resistor (40).

9. Circuit arrangement (13) according to Claim 7 or 8, **characterized in that** the computer (2) of the control unit applies to the ports (Port1, Port2) an initialisation signal for enabling the output stages (7 to 12) as long as it is in a reliably operating state.

10. Circuit arrangement (13) according to one of Claims 1 to 9, **characterized in that** the voltage to be monitored is the supply voltage (VCC) of the control unit.

## Revendications

1. Circuit (13) d'un appareil de commande pour surveiller une tension et déterminer une déviation de tension par rapport à une certaine valeur de tension et émettre un signal de remise à l'état initial (RSTE) pour verrouiller les étages de puissance (7-12), commandés par l'appareil de commande en cas de déviation de tension au-delà de la valeur de tension, comprenant :
- des moyens pour générer une tension de référence (REF),
- un premier comparateur pour comparer la tension de référence (REF) à une première valeur de tension de comparaison résultant de la tension à surveiller multipliée par un premier coefficient de proportionnalité et pour émettre le signal de remise à l'état initial (RSTE), et
- un second comparateur,
**caractérisé en ce que**
le second comparateur compare la tension de référence (REF) à une seconde valeur de tension de comparaison résultant de la multiplication de la tension à surveiller avec un second coefficient de proportionnalité, et
le second comparateur émet le signal de remise à l'état initial (RSTE).

2. Circuit (13) selon la revendication 1,
**caractérisé en ce qu'**
il comporte deux diviseurs de tension reliés d'un côté à la tension à surveiller et de l'autre à la masse, les valeurs de tension de comparaison étant prises sur une prise (23, 24) du diviseur de tension.

3. Circuit selon la revendication 2,
**caractérisé en ce que**
les résistances (19, 20 ; 21, 22) du diviseur de tension sont choisies pour que la première valeur de la tension de comparaison sur la prise (23) du premier diviseur de tension correspond à un seuil de surtension et la seconde valeur de tension de comparaison sur la prise (24) du second diviseur de tension représente un seuil de sous tension.

4. Circuit (13) selon l'une quelconque des revendications 1 à 3,
**caractérisé en ce que**
les comparateurs sont des comparateurs (17, 18).

5. Circuit (13) selon la revendication 4,
**caractérisé en ce que**
pour le premier comparateur (17), la tension de référence (REF) est appliquée à l'entrée positive (+) et la première valeur de tension de comparaison est appliquée à l'entrée négative (-) et pour le second comparateur (18), la tension de référence (REF) est appliquée à l'entrée négative (-) et la seconde valeur de tension de comparaison est appliquée à l'entrée positive (+).

6. Circuit (13) selon l'une quelconque des revendications 1 à 5,
**caractérisé en ce que**
les moyens pour générer une tension de référence sont constitués par une diode de tension de référence (14).

7. Circuit (13) selon l'une quelconque des revendications 2 à 6,
**caractérisé en ce que**
la prise (23) du premier diviseur de tension est reliée au collecteur d'un transistor (35) dont l'émetteur est relié à la tension à surveiller et dont la base est reliée à une première borne (Port1) d'un calculateur (2) de l'appareil de commande et mise à la masse par une résistance (39) tirant vers le bas.

8. Circuit (13) selon l'une quelconque des revendications 2 à 7,
**caractérisé en ce que**
la prise (24) du second diviseur de tension est reliée au collecteur d'un transistor (36) dont l'émetteur est à la masse et dont la base est reliée à une seconde borne (Port2) d'un calculateur (2) de l'appareil de commande et raccordée à la tension à surveiller par une résistance tirant vers le bas (40), la liaison est faite.

9. Circuit (13) selon la revendication 7 ou la revendication 8,
**caractérisé en ce que**
le calculateur (2) de l'appareil de commande applique aux bornes (Port1, Port2) un signal d'initialisation pour libérer les étages de puissance (7 à 12) aussi longtemps qu'il est dans un état fonctionnant de manière fiable.

10. Circuit (13) selon l'une quelconque des revendications 1 à 9,
**caractérisé en ce que**
la tension à surveiller est la tension d'alimentation (VCC) de l'appareil de commande.
